# EUROPEAN PATENT APPLICATION

(11) **EP 4 258 441 A1**
(43) Date of publication of application: **11.10.2023**
(21) Application number: 22716302.9
(22) Date of filing: 21.02.2022
(51) Int. Cl.: H01M 50/244, H01M 50/204, H01M 50/242, H01M 10/613, H01M 10/625, H01M 10/647, H01M 10/6557, H01M 50/289

(54) **BATTERY, ELECTRIC DEVICE, AND BATTERY PREPARATION METHOD AND DEVICE**

(71) Applicant: Contemporary Amperex Technology Co., Limited, Jiaocheng District Ningde City, Fujian 352100 (CN)
(72) Inventor: SUN, Zhanyu, Ningde, Fujian 352100 (CN); LONG, Chao, Ningde, Fujian 352100 (CN); WANG, Peng, Ningde, Fujian 352100 (CN); CHEN, Xingdi, Ningde, Fujian 352100 (CN)
(74) Representative: Herrero & Asociados, S.L.
(86) International application number: PCT/CN2022/077151
(87) International publication number: WO 2023/155210

(57) **Abstract**

Embodiments of the present application provide a battery, a power consumption device, and a method and device for producing a battery. The battery includes: a plurality of battery cells arranged in a first direction; and a spacer plate, the spacer plate extending in the first direction and being connected to a first wall of each battery cell of the plurality of battery cells, and the first wall being a wall of the battery cell that has a largest surface area, where a size T1 of the spacer plate in a second direction is greater than 5 mm, and the second direction is perpendicular to the first wall. According to technical solutions of the embodiments of the present application, performance of the battery could be improved.

## Description

### TECHNICAL FIELD

The present application relates to the field of battery technologies, and in particular, to a battery, a power consumption device, and a method and device for producing a battery.

### BACKGROUND

With the increasing environmental pollution, the new energy industry has attracted more and more attention from people. In the new energy industry, the battery technology is an important factor related to its development.

A space utilization ratio of an interior of a battery affects structural strength and energy density of the battery, and further affects performance of the battery. How to improve performance of a battery is an urgent technical problem to be solved in the battery technology.

### SUMMARY

The present application provides a battery, a power consumption device, and a method and device for producing a battery, which could improve structural strength and an energy density of the battery, thereby improving performance of the battery.

In a first aspect, a battery is provided, including: a plurality of battery cells arranged in a first direction; and a spacer plate, the spacer plate extending in the first direction and being connected to a first wall of each battery cell of the plurality of battery cells, and the first wall being a wall of the battery cell that has a largest surface area, where a size T1 of the spacer plate in a second direction is greater than 5 mm, and the second direction is perpendicular to the first wall.

In an embodiment of the present application, in a battery, a spacer plate is disposed to be connected to a first wall of each battery cell of a column of a plurality of battery cells arranged in a first direction that has a largest surface area, and a size T1 of the spacer plate in a second direction perpendicular to the first direction is greater than 5 mm. The plurality of battery cells are connected as a whole through the spacer plate. In this case, no side plate is provided in the battery, and there is no need to provide a structure such as a beam, which can greatly improve a space utilization ratio of an interior of the battery and improve structural strength and energy density of the battery, thereby improving performance of the battery.

In a possible implementation manner, a chamber is disposed in an interior of the spacer plate.

In this way, the spacer plate provided with a chamber structure has an ability to absorb deformation, and can absorb an amount of expansion deformation of the battery cells, which improves the performance of the battery.

In a possible implementation manner, the chamber is configured to accommodate a fluid to adjust a temperature of the battery cell. In this way, the temperature of the battery cell can be conveniently adjusted at any moment to be in a suitable range, and stability and safety of the battery cell can be improved.

In a possible implementation manner, the spacer plate further includes a pair of sub-plates disposed opposite to each other in the second direction, and the chamber is disposed between the pair of sub-plates.

In a possible implementation manner, a size T3 of a sub-plate in the second direction is 0.1~5 mm.

When the size T3 of the sub-plate in the second direction is too small, the chamber occupies most of the space of the spacer plate in a case of a fixed space in the spacer plate. In this case, stiffness of the spacer plate is very weak, which cannot effectively improve the structural strength of the battery. When the size T3 of the sub-plate in the second direction is too great, the chamber in the interior of the spacer plate is too small and can accommodate little fluid, which cannot effectively adjust the temperature of the battery cell. Therefore, the value of T3 is set to be 0. 1~5 mm.

In a possible implementation manner, the spacer plate further includes a reinforcing rib, and the reinforcing rib is disposed between the pair of sub-plates. The stiffness of the spacer plate can be enhanced by providing the reinforcing rib.

In a possible implementation manner, the size T1 of the spacer plate in the second direction and a size T2 of the battery cell in the second direction satisfy: 0.04≤T1/T2≤2.

When T1/T2 is too small, that is, when the size T1 of the spacer plate in the second direction is much smaller than the size T2 of the battery cell in the second direction, the spacer plate has a weak ability to absorb deformation, which cannot match the amount of expansion deformation of the battery cell and reduce service performance of the battery cell. When T1/T2 is too great, that is, when the size T1 of the spacer plate in the second direction is much greater than the size T2 of the battery cell in the second direction, the spacer plate has a strong ability to absorb deformation, which far exceeds the space of expansion deformation required by the battery cells, and the spacer plate occupies too much space of the interior of the battery compared with the battery cells, which is disadvantageous to the improvement of the energy density of the battery. Therefore, the value of T1/T2 is set to be 0.04-2, which can both improve the energy density of the battery and absorb the amount of expansion deformation of the battery cells.

In a possible implementation manner, the size T1 of the spacer plate in the second direction is not greater than 100 mm.

When the size T1 of the spacer plate in the second direction is too great, the spacer plate occupies too much space of the interior of the battery, which is disadvantageous to the improvement of the energy density of the battery. Therefore, the value of T1 is set to be not greater than 100 mm, which can effectively improve the energy density of the battery.

In a possible implementation manner, an outer surface of the spacer plate is provided with an insulating layer, and a size T4 of the insulating layer in the second direction is 0.01~0.3 mm.

The electrical connection between the spacer plate and the battery cells is avoided by providing the insulating layer on the outer surface of the spacer plate, which improves the safety of the battery. When the size T4 of the insulating layer in the second direction is too small, the insulating layer cannot effectively avoid the electrical connection between the battery cells and the spacer plate, and bad insulation occurs in the battery. When the size T4 of the insulating layer in the second direction is too great, the insulating layer occupies too much space of the interior of the battery, which is disadvantageous to the improvement of the energy density of the battery. Therefore, the value of T4 is set to be 0.01~0.3 mm, which can both improve the energy density of the battery and ensure effective insulation between the battery cells and the spacer plate.

In a possible implementation manner, the battery cell includes two first walls disposed opposite to each other in the second direction and two second walls disposed opposite to each other in the first direction, where in the first direction, the second walls of two adjacent battery cells are opposite to each other.

In a possible implementation manner, the battery includes multiple columns of the plurality of battery cells arranged in the first direction and a plurality of spacer plates, where the multiple columns of the battery cells and the plurality of spacer plates are alternately disposed in the second direction.

In this way, first walls of each column of the plurality of battery cells arranged in the first direction X can be connected to a spacer plate, each column of the plurality of battery cells arranged in the first direction X can be connected as a whole through the spacer plate, and thus the strength of the battery is effectively improved.

In a possible implementation manner, the battery includes a plurality of battery modules, a battery module includes at least one column of the plurality of battery cells arranged in the first direction and at least one spacer plate, and the at least one column of the battery cells and the at least one spacer plate are alternately disposed in the second direction. In this way, the multiple columns of the battery cells and the plurality of spacer plate are connected to each other to form a whole, and are accommodated in a box, which could not only effectively fix each column of the battery cells, but also ensure the energy density of the overall battery, thereby improving the performance of the battery.

In a possible implementation manner, the battery module includes N columns of the battery cells and N-1 spacer plate(s), the spacer plate is disposed between two adjacent columns of the battery cells, and N is an integer greater than 1. In this way, fewer spacer plates may be disposed in the battery, and at the same time, it can be ensured that each battery cell could be connected to the spacer plate.

In a possible implementation manner, the plurality of battery modules are arranged in the second direction, and a gap is provided between adjacent battery modules. The gap may provide an expansion space for the battery cells.

In a possible implementation manner, the spacer plate is bonded to the first wall.

The spacer plate is fixedly connected to the first wall by means of bonding, and the structure is simple, which is convenient for processing and assembly.

In a second aspect, a power consumption device is provided, including: the battery in the above first aspect or any possible implementation manner of the first aspect, the battery being configured to provide electric energy.

In a third aspect, a method for producing a battery is provided, including: providing a plurality of battery cells arranged in a first direction; and providing a spacer plate, the spacer plate extending in the first direction and being connected to a first wall of each battery cell of the plurality of battery cells, and the first wall being a wall of the battery cell that has a largest surface area, where a size T1 of the spacer plate in a second direction is greater than 5 mm, and the second direction is perpendicular to the first wall.

In a fourth aspect, a device for producing a battery is provided, including a module for executing the method according to the above third aspect.

In a technical solution of an embodiment of the present application, a plurality of battery cells are arranged in a first direction, a first wall of each battery cell that has a largest surface area is connected to a spacer plate extending in the first direction. The plurality of battery cells are connected as a whole through the spacer plate. In this case, no side plate is provided in a battery, and there is no need to provide a structure such as a beam, which can greatly improve a space utilization ratio of an interior of the battery and improve structural strength and energy density of the battery, thereby improving performance of the battery.

### BRIEF DESCRIPTION OF DRAWINGS

In order to illustrate technical solutions in embodiments of the present application more clearly, brief description will be made below to accompanying drawings required in the embodiments of the present application. Apparently, the accompanying drawings described below are some embodiments of the present application only, and other drawings could be obtained based on these accompanying drawings by those ordinary skilled in this art without creative efforts.
FIG. 1 is a schematic structural diagram of a vehicle disclosed in an embodiment of present application;
FIG. 2 is a schematic diagram of an exploded structure of a battery disclosed in an embodiment of the present application;
FIG. 3 is a schematic diagram of an exploded structure of a battery cell disclosed in an embodiment of the present application;
FIG. 4 is a schematic structural diagram of part of a battery disclosed in an embodiment of the present application;
FIG. 5 is a partial cross-sectional view of a battery disclosed in an embodiment of the present application;
FIG. 6 is a schematic structural diagram of a spacer plate disclosed in an embodiment of the present application;
FIG. 7 is a schematic structural diagram of a battery cell disclosed in an embodiment of the present application;
FIG. 8 is a schematic structural diagram of a battery disclosed in an embodiment of the present application;
FIG. 9 is a schematic structural diagram of a battery module disclosed in an embodiment of the present application;
FIG. 10 is a schematic structural diagram of a battery disclosed in an embodiment of the present application;
FIG. 11 is a schematic flowchart of a method for producing a battery according to an embodiment of the present application; and
FIG. 12 is a schematic block diagram of a device for producing a battery according to an embodiment of the present application.

In the accompanying drawings, the accompanying drawings are not drawn to actual scale.

### DESCRIPTION OF EMBODIMENTS

Implementation manners of the present application will be further described below in detail with reference to drawings and embodiments. The detailed description of the following embodiments and the accompanying drawings are used to exemplarily illustrate principles of the present application, but cannot be used to limit the scope of the present application, that is, the present application is not limited to the described embodiments.

In the depiction of the present application, it should be noted that, unless otherwise illustrated, all technological and scientific terms used have the same meanings as those commonly understood by those skilled in the art to which the present application belongs. The terms used are merely for the purpose of describing specific embodiments, but are not intended to limit the present application. The terms "including" and "having" and any variations thereof in the specification and the claims of the present application as well as the brief description of the drawings described above are intended to cover non-exclusive inclusions. The meaning of "a plurality of" is two or more; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within an allowable range of error. "Parallel" is not strictly parallel, but within an allowable range of error.

The phrase "embodiment" mentioned in the present application means that the specific features, structures, or characteristics described with reference to the embodiment may be included in at least one embodiment of the present application. The phrase at various locations in the specification does not necessarily refer to the same embodiment, or an independent or alternate embodiment that is mutually exclusive from another embodiment. Those skilled in the art understand, in explicit and implicit manners, that the embodiments described in the present application may be combined with another embodiment.

The terms representing orientations in the following description are all directions shown in the drawings, and do not limit the specific structure of the present application. In the description of the present application, it should be further noted that, unless otherwise explicitly specified and defined, terms "installation", "interconnection" and "connection" should be understood in a broad sense; for example, they may be either a fixed connection, or a detachable connection, or an integrated connection; and they may be either a direct connection, or an indirect connection through an intermediate medium, or communication between interiors of two elements. Those of ordinary skill in the art may appreciate the specific meanings of the foregoing terms in the present application according to specific conditions.

In the present application, the term "and/or" is only an association relation describing associated objects, which means that there may be three relations. For example, A and/or B may represent three situations: A exists alone, both A and B exist, and B exists alone. In addition, the character "/" in the present application generally indicates that the associated objects before and after the character are in an "or" relationship.

In the present application, a battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, cuboid or in another shape, which is not limited in the embodiments of the present application. A battery cell is generally divided into three types according to the way of packaging: a cylindrical battery cell, a prismatic battery cell and a pouch battery cell, which is also not limited in the embodiments of the present application.

The battery mentioned in the embodiments of the present application refers to a single physical module including one or more battery cells to provide a higher voltage and capacity. For example, the battery mentioned in the present application may include a battery pack or the like. The battery generally includes a box for packaging one or more battery cells. The box can avoid liquid or other foreign matters to affect charging or discharging of the battery cell.

The battery cell includes an electrode assembly and an electrolytic solution, and the electrode assembly is composed of a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive electrode active material layer. The positive electrode active material layer is coated on a surface of the positive electrode current collector, the current collector not coated with the positive electrode active material layer protrudes from the current collector coated with the positive electrode active material layer, and the current collector not coated with the positive electrode active material layer is used as a positive electrode tab. In an example of a lithium-ion battery, the material of the positive electrode current collector may be aluminum, and the positive electrode active material may be lithium cobalt oxides, lithium iron phosphate, ternary lithium, lithium manganate, or the like. The negative electrode sheet includes a negative electrode current collector and a negative electrode active material layer. The negative electrode active material layer is coated on a surface of the negative electrode current collector, the current collector not coated with the negative electrode active material layer protrudes from the current collector coated with the negative electrode active material layer, and the current collector not coated with the negative electrode active material layer is used as a negative electrode tab. The material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. The material of the separator may be polypropylene (PP), polyethylene (PE), or the like. In addition, the electrode assembly may be a winding structure or a laminated structure, and the embodiments of the present application are not limited thereto.

In order to meet different power demands, the battery may include a plurality of battery cells, where the plurality of battery cells may be in series connection, parallel connection or series-parallel connection. The series-parallel connection refers to a combination of series connection and parallel connection. Optionally, the plurality of battery cells may be first connected in series, in parallel or in series and parallel to constitute a battery module, and then a plurality of battery modules are connected in series, in parallel or in series and parallel to constitute a battery. That is, the plurality of battery cells may directly constitute a battery, or may first constitute a battery module, and then battery modules constitute a battery. The battery is further disposed in a power consumption device to provide electrical energy for the power consumption device.

With the development of the battery technology, it is necessary to consider design factors in multiple aspects simultaneously, such as energy density, cycle life, discharging capacity, C-rate, and safety. Among them, when an internal space of the battery is fixed, improvement of a utilization ratio of the internal space of the battery is an effective means to improve the energy density of the battery. However, while improving the utilization ratio of the internal space of the battery, it is possible to reduce structural strength of the battery. For example, a beam used to mount the battery module is usually disposed in an interior of the box of the battery. In addition, the battery module in the battery is also provided with a side plate and an end plate. The above-mentioned beam, side plate and end plate occupy the internal space of the battery while implementing the fixing of the battery. However, if the beam, the side plate and the end plate are not provided, the structural strength of the battery will be insufficient, and the performance of the battery will be affected.

In view of this, an embodiment of the present application provides a technical solution. In the embodiment of the present application, in a battery, a spacer plate is disposed to be connected to a first wall of each battery cell of a column of a plurality of battery cells arranged in a first direction that has a largest surface area, and a size T1 of the spacer plate in a second direction perpendicular to the first direction is greater than 5 mm. The plurality of battery cells are connected as a whole through the spacer plate. In this case, no side plate is provided in the battery, and there is no need to provide a structure such as a beam, which can greatly improve a space utilization ratio of an interior of the battery and improve structural strength and energy density of the battery, thereby improving performance of the battery.

The technical solutions described in the embodiments of the present application are all applicable to various apparatuses using batteries, such as mobile phones, portable devices, notebook computers, electromobiles, electric toys, electric tools, electric vehicles, ships and spacecrafts. For example, the spacecrafts include airplanes, rockets, space shuttles, spaceships, and the like.

It should be understood that the technical solutions described in the embodiments of the present application are not only applicable to the devices described above, but also applicable to all devices using batteries. However, for brief description, the following embodiments are all described by an example of an electric vehicle.

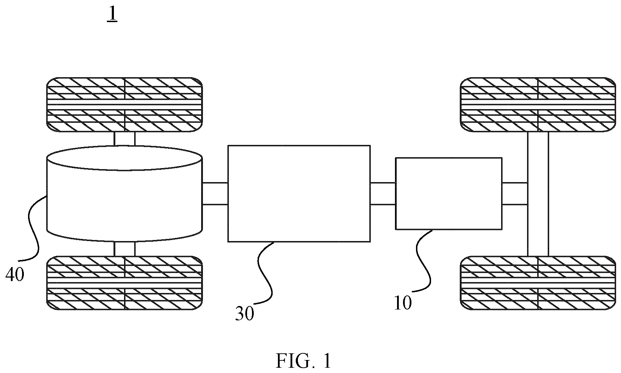

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. A motor 40, a controller 30 and a battery 10 may be disposed in an interior of the vehicle 1, and the controller 30 is configured to control the battery 10 to supply power to the motor 40. For example, the battery 10 may be disposed at the bottom, head or tail of the vehicle 1. The battery 10 may be configured to supply power to the vehicle 1. For example, the battery 10 may be used as an operation power source of the vehicle 1 for a circuit system of the vehicle 1, for example, for a working power demand of the vehicle 1 during startup, navigation and running. In another embodiment of the present application, the battery 10 may be used not only as an operation power source of the vehicle 1, but also as a driving power source of the vehicle 1, replacing or partially replacing fuel or natural gas to provide driving power for the vehicle 1.

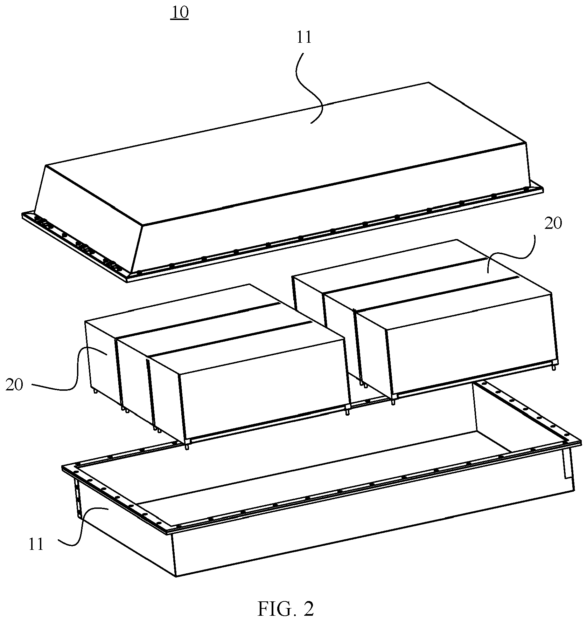

In order to meet different power usage demands, the battery 10 may include a plurality of battery cells. For example, as shown in FIG. 2, FIG. 2 is a schematic structural diagram of a battery 10 according to an embodiment of the present application. The battery 10 may include a plurality of battery cells 20. The battery 10 may further include a box 11, an interior of the box 11 is a hollow structure, and the plurality of battery cells 20 are accommodated in the box 11. For example, the plurality of battery cells 20 are combined in parallel connection or series connection or series-parallel connection and then placed in the box 11.

Optionally, the battery 10 may further include another structure, which will not be repeated redundantly herein. For example, the battery 10 may further include a bus component, and the bus component is configured to implement the electrical connection between the plurality of battery cells 20, such as parallel connection, series connection or series-parallel connection. Specifically, the bus component may implement the electrical connection between the battery cells 20 by connecting electrode terminals of the battery cells 20. Further, the bus component may be fixed to the electrode terminals of the battery cells 20 by means of welding. Electric energy of the plurality of battery cells 20 may be further led out through an electrically conductive mechanism to pass through the box. Optionally, the electrically conductive mechanism may also belong to the bus component.

According to different power demands, the number of battery cells 20 may be set to any value. The plurality of battery cells 20 may be connected in series, in parallel or in series and parallel to implement a larger capacity or power. Since there may be many battery cells 20 included in each battery 10, the battery cells 20 may be arranged in groups for convenience of installation, and each group of battery cells 20 constitutes a battery module. The number of battery cells 20 included in the battery module is not limited and may be set according to demands. The battery may include a plurality of battery modules, and these battery modules may be connected in series, in parallel or in series and parallel.

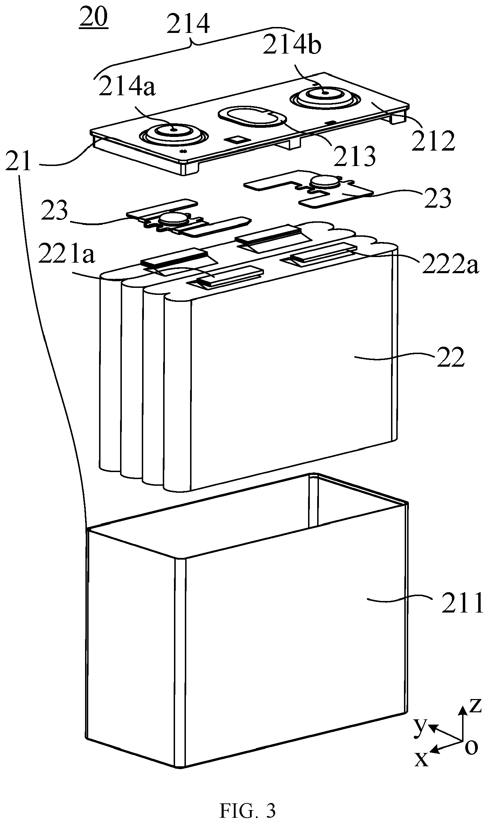

As shown in FIG. 3, FIG. 3 is a schematic structural diagram of a battery cell 20 according to an embodiment of the present application. The battery cell 20 includes one or more electrode assemblies 22, a housing 211 and a cover plate 212. The housing 211 and the cover plate 212 form a shell or a battery case 21. A wall of the housing 211 and the cover plate 212 each are referred to as a wall of the battery cell 20, where for a cuboid battery cell 20, the wall of the housing 211 includes a bottom wall and four side walls. The housing 211 is shaped according to a shape of the one or more electrode assemblies 22 after combination. For example, the housing 211 may be a hollow cuboid or cube or cylinder, and one face of the housing 211 has an opening, so that the one or more electrode assemblies 22 may be placed in the housing 211. For example, when the housing 211 is a hollow cuboid or cube, one plane of the housing 211 is a surface with an opening, that is, the plane does not have a wall, so that the inside and outside of the housing 211 are in communication with each other. When the housing 211 may be a hollow cylinder, an end face of the housing 211 is a surface with an opening, that is, the end face does not have a wall, so that the inside and outside of the housing 211 are in communication with each other. The cover plate 212 covers the opening and is connected to the housing 211 to form a closed cavity in which the electrode assemblies 22 are placed. The housing 211 is filled with an electrolyte, such as an electrolytic solution.

The battery cell 20 may further include two electrode terminals 214, and the two electrode terminals 214 may be disposed on the cover plate 212. The cover plate 212 is generally in a shape of a flat plate, and the two electrode terminals 214 are fixed on a flat plate face of the cover plate 212. The two electrode terminals 214 are a positive electrode terminal 214a and a negative electrode terminal 214b, respectively. Each electrode terminal 214 is correspondingly provided with a connecting member 23 also called as a current collecting member 23, which is located between the cover plate 212 and the electrode assembly 22 and configured to electrically connect the electrode assembly 22 to the electrode terminal 214.

As shown in FIG. 3, each electrode assembly 22 has a first electrode tab 221a and a second electrode tab 222a. The first electrode tab 221a and the second electrode tab 222a have opposite polarities. For example, when the first electrode tab 221a is a positive electrode tab, the second electrode tab 222a is a negative electrode tab. First electrode tabs 221a of the one or more electrode assemblies 22 are connected to one electrode terminal through one connecting member 23, and second electrode tabs 222a of the one or more electrode assemblies 22 are connected to the other electrode terminal through the other connecting member 23. For example, the positive electrode terminal 214a is connected to the positive electrode tab through one connecting member 23, and the negative electrode terminal 214b is connected to the negative electrode tab through the other connecting member 23.

In this battery cell 20, according to actual usage demands, the electrode assembly 22 may be set to be single or multiple in number. As shown in FIG. 3, four independent electrode assemblies 22 are disposed in the battery cell 20.

A pressure relief mechanism 213 may also be disposed on the battery cell 20. The pressure relief mechanism 213 is configured to be actuated when an internal pressure or temperature of the battery cell 20 reaches a threshold, to relieve the internal pressure or temperature.

The pressure relief mechanism 213 may be various possible pressure relief structures, which is not limited in the embodiments of the present application. For example, the pressure relief mechanism 213 may be a temperature-sensitive pressure relief mechanism, the temperature-sensitive pressure relief mechanism is configured to be capable of being melted when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to be capable of being fractured when an internal gas pressure of the battery cell 20 provided with the pressure relief mechanism 213 reaches a threshold.

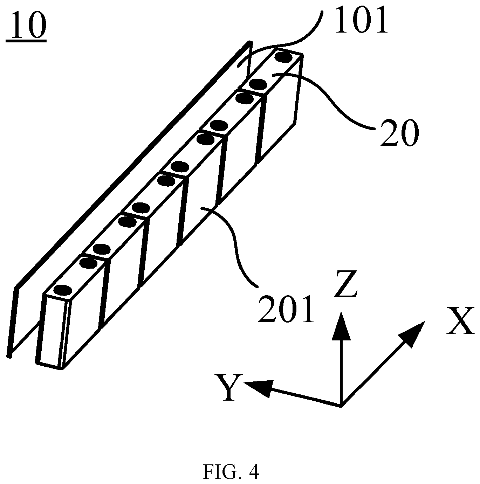

FIG. 4 shows a schematic structural diagram of a battery 10 according to an embodiment of the present application. As shown in FIG. 4, the battery 10 includes a plurality of battery cells 20 arranged in a first direction X and a spacer plate 101, the spacer plate 101 extends in the first direction X and is connected to a first wall 201 of each battery cell 20 of the plurality of battery cells 20, and the first wall 201 is a wall of the battery cell 20 that has a largest surface area.

In this way, the first wall 201 of each battery cell 20 of the plurality of battery cells 20 that has a largest surface area is connected to the spacer plate 101, and the plurality of battery cells 20 are connected as a whole through the spacer plate 101. In this case, no side plate is provided in the battery 10, and there is no need to provide a structure such as a beam, which can greatly improve a space utilization ratio of an interior of the battery 10 and improve structural strength and energy density of the battery 10.

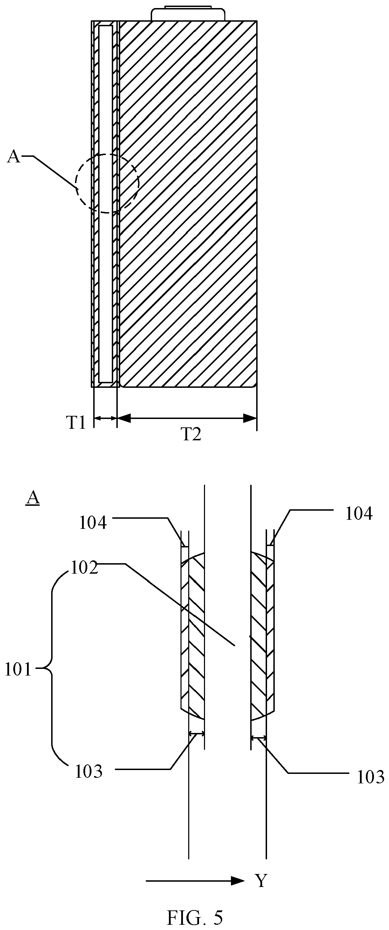

In an embodiment of the present application, as shown in FIG. 5, a size T1 of the spacer plate 101 in a second direction Y is greater than 5 mm, and the second direction Y is perpendicular to the first wall 201.

In an embodiment of the present application, the size T1 of the spacer plate 101 in the second direction Y is not greater than 100 mm.

When the size T1 of the spacer plate 101 in the second direction is too great, the spacer plate 101 occupies too much space of the interior of the battery 10, which is disadvantageous to the improvement of the energy density of the battery 10. Therefore, the value of T1 is set to be not greater than 100 mm, which can effectively improve the energy density of the battery 10.

In an embodiment of the present application, as shown in FIG. 5, a chamber 102 is disposed in an interior of the spacer plate 101.

In this way, the spacer plate 101 provided with a chamber structure has an ability to absorb deformation, and can absorb an amount of expansion deformation of the battery cells 20, which improves the performance of the battery 10.

Optionally, the chamber 102 may be configured to accommodate a fluid to adjust a temperature of the battery cell 20.

It should be understood that the fluid mentioned here may be a liquid that can adjust the temperature and does not chemically react with the material of the chamber 102, such as water, which is not limited in the present application.

In this way, the temperature of the battery cell 20 can be conveniently adjusted at any moment to be in a suitable range, and stability and safety of the battery cell 20 can be improved.

In an embodiment of the present application, the spacer plate 101 further includes a pair of sub-plates 103 disposed opposite to each other in the second direction Y, and the chamber 102 is disposed between the pair of sub-plates 103.

In an embodiment of the present application, as shown in FIG. 5, a size T3 of a sub-plate 103 in the second direction Y is 0. 1~5 mm.

When the size T3 of the sub-plate 103 in the second direction is too small, the chamber 102 occupies most of the space of the spacer plate 101 in a case of a fixed space in the spacer plate 101. In this case, stiffness of the spacer plate 101 is very weak, which cannot effectively improve the structural strength of the battery 10. When the size T3 of the sub-plate 103 in the second direction is too great, the chamber 102 in the interior of the spacer plate 101 is too small and can accommodate little fluid, which cannot effectively adjust the temperature of the battery cell 20. Therefore, the value of T3 is set to be 0.1~5 mm.

Optionally, the sizes T3 of the pair of sub-plates 103 of the spacer plate in the second direction may be the same or different.

In an embodiment of the present application, the spacer plate 101 further includes a reinforcing rib 105, and the reinforcing rib 105 is disposed between the pair of sub-plates 103.

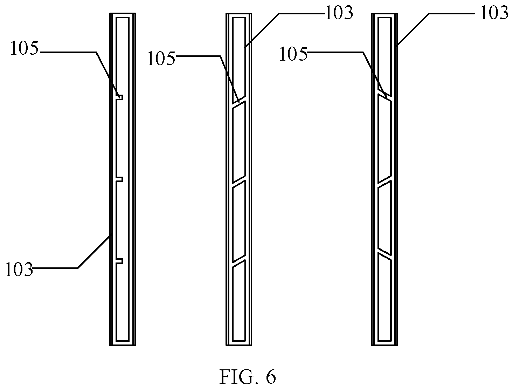

Optionally, as shown in (a) of FIG. 6, the reinforcing rib 105 may be disposed on only one sub-plate 103. As shown in (b) of FIG. 6, the reinforcing rib 105 may be disposed between a pair of sub-plates 103 and connected to the pair of sub-plates 103.

Optionally, as shown in (b) and (c) of FIG. 6, an included angle between the reinforcing rib 105 and the sub-plate 103 may be an acute angle. As shown in (a) of FIG. 6, an included angle between the reinforcing rib 105 and the sub-plate 103 may be a right angle.

In an embodiment of the present application, the size T1 of the spacer plate 101 in the second direction Y and a size T2 of the battery cell 20 in the second direction Y satisfy: 0.04≤T1/T2≤2.

When T1/T2 is too small, that is, when the size T1 of the spacer plate 101 in the second direction is much smaller than the size T2 of the battery cell 20 in the second direction, the spacer plate 101 has a weak ability to absorb deformation, which cannot match the amount of expansion deformation of the battery cell 20 and reduce service performance of the battery cell 20. When T1/T2 is too great, that is, when the size T1 of the spacer plate 101 in the second direction is much greater than the size T2 of the battery cell 20 in the second direction, the spacer plate 101 has a strong ability to absorb deformation, which far exceeds the space of expansion deformation required by the battery cells 20, and the spacer plate 101 occupies too much space of the interior of the battery 10 compared with the battery cells 20, which is disadvantageous to the improvement of the energy density of the battery 10. Therefore, the value of T1/T2 is set to be 0.04-2, which can both improve the energy density of the battery 10 and absorb the amount of expansion deformation of the battery cells 20.

In an embodiment of the present application, an outer surface of the spacer plate 101 is provided with an insulating layer 104, and a size T4 of the insulating layer 104 in the second direction Y is 0.01~0.3 mm. Optionally, the insulating layer 104 may be an insulating film bonded to the surface of the spacer plate 101 or insulating paint coated on the surface of the spacer plate 101.

The electrical connection between the spacer plate 101 and the battery cells 20 is avoided by providing the insulating layer 104 on the outer surface of the spacer plate 101, which improves the safety of the battery 10. When the size T4 of the insulating layer 104 in the second direction is too small, the insulating layer 104 cannot effectively avoid the electrical connection between the battery cells 20 and the spacer plate 101, and bad insulation occurs in the battery 10. When the size T4 of the insulating layer 104 in the second direction is too great, the insulating layer 104 occupies too much space of the interior of the battery 10, which is disadvantageous to the improvement of the energy density of the battery 10. Therefore, the value of T4 is set to be 0.01~0.3 mm, which can both improve the energy density of the battery 10 and ensure effective insulation between the battery cells 20 and the spacer plate 101.

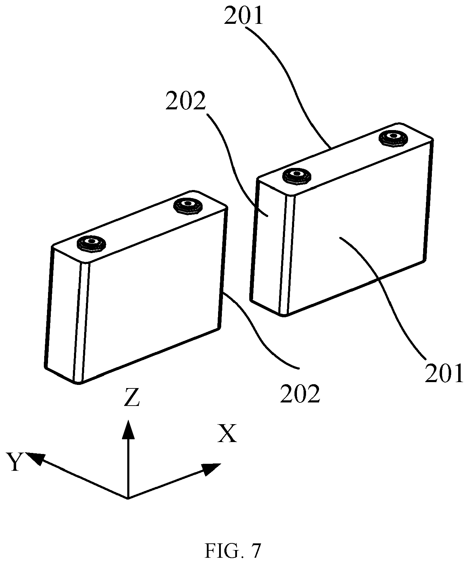

In an embodiment of the present application, as shown in FIG. 7, the battery cell 20 includes two first walls 201 disposed opposite to each other in the second direction Y and two second walls disposed opposite to each other in the first direction X, where in the first direction X, the second walls of two adjacent battery cells 20 are opposite to each other.

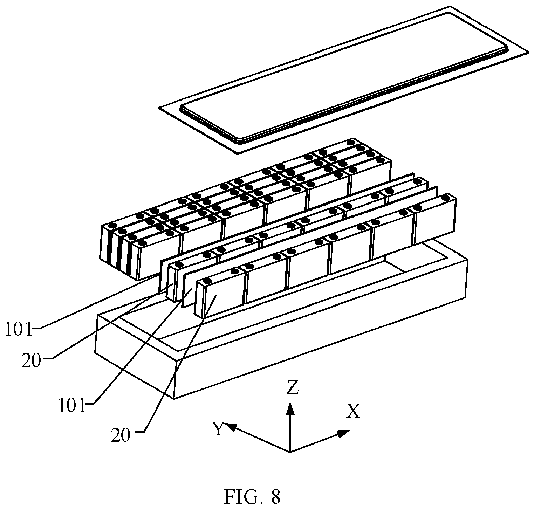

In an embodiment of the present application, as shown in FIG. 8, the battery 10 includes multiple columns of the plurality of battery cells 20 arranged in the first direction X and a plurality of spacer plates 101, where the multiple columns of the battery cells 20 and the plurality of spacer plates 101 are alternately disposed in the second direction Y

In this way, first walls 201 of each column of the plurality of battery cells 20 arranged in the first direction X can be connected to a spacer plate 101, each column of the plurality of battery cells 20 arranged in the first direction X can be connected as a whole through the spacer plate 101, and thus the strength of the battery 10 is effectively improved.

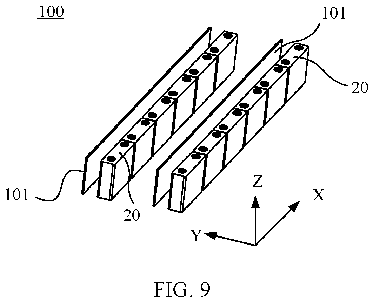

In an embodiment of the present application, the battery 10 includes a plurality of battery 10 modules. As shown in FIG. 9, a battery 10 module includes at least one column of the plurality of battery cells 20 arranged in the first direction X and at least one spacer plate 101, and the at least one column of the battery cells 20 and the at least one spacer plate 101 are alternately disposed in the second direction Y

In an embodiment of the present application, the battery module 100 includes N columns of the battery cells 20 and N-1 spacer plate(s) 101, the spacer plate 101 is disposed between two adjacent columns of the battery cells 20, and N is an integer greater than 1. As shown in FIG. 9, it is illustrated by an example that N is 2.

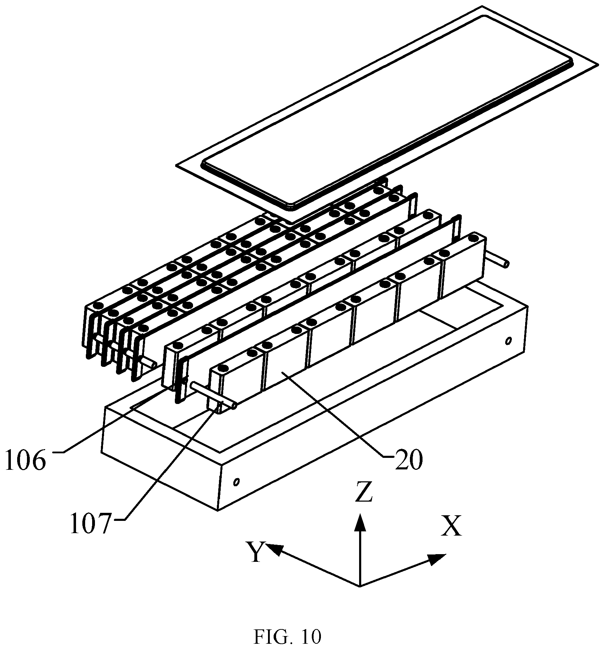

In an embodiment of the present application, as shown in FIG. 10, the plurality of battery modules 100 are arranged in the second direction Y, and a gap is provided between adjacent battery modules 100.

Optionally, an end part of the spacer plate 101 in the first direction X is provided with a current collector 106, the interior of the battery 10 is provided with a pipe 107, the pipe 107 is configured to convey the fluid, and the current collector 106 is configured to collect the fluid.

In an embodiment of the present application, the spacer plate 101 is bonded to the first wall 201. The spacer plate 101 is fixedly connected to the first walls 201 by means of bonding, and the structure is simple, which is convenient for processing and assembly.

It should be understood that the spacer plate 101 and the first walls 201 may also be connected by other means, for example, riveting and welding, which is not limited in the embodiments of the present application.

An embodiment of the present application further provides a power consumption device, and the power consumption device may include the battery 10 in the foregoing embodiments. Optionally, the power consumption device may be a vehicle 1, a ship, a spacecraft, or the like, which is not limited in the embodiments of the present application.

The battery 10 and the power consumption device according to the embodiments of the present application are described above. A method and device for producing a battery 10 according to the embodiments of the present application will be described below, and for the parts that are not described in detail, reference is made to the foregoing embodiments.

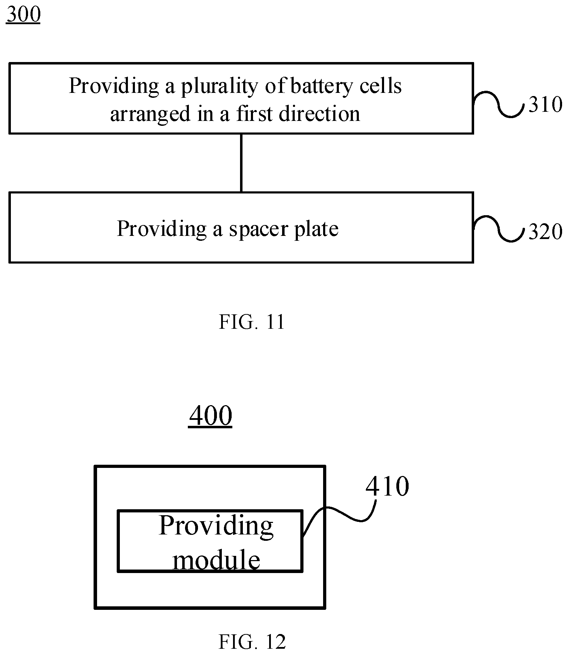

FIG. 11 shows a schematic flowchart of a method 300 for producing a battery 10 according to an embodiment of the present application. As shown in FIG. 11, the method 300 may include:
310, providing a plurality of battery cells 20 arranged in a first direction X; and
320, providing a spacer plate 101, the spacer plate 101 extending in the first direction X and being connected to a first wall 201 of each battery cell 20 of the plurality of battery cells 20, and the first wall 201 being a wall of the battery cell 20 that has a largest surface area, where a size T1 of the spacer plate 101 in a second direction Y is greater than 5 mm, and the second direction Y is perpendicular to the first wall 201.

FIG. 12 shows a schematic block diagram of a device 400 for producing a battery 10 according to an embodiment of the present application. As shown in FIG. 12, the device 400 for producing the battery 10 may include: a providing module 410.

The providing module 410 is configured to provide a plurality of battery cells 20 arranged in a first direction X and a spacer plate 101, the spacer plate 101 extends in the first direction X and is connected to a first wall 201 of each battery cell 20 of the plurality of battery cells 20, and the first wall 201 is a wall of the battery cell 20 that has a largest surface area, where a size T1 of the spacer plate 101 in a second direction Y is greater than 0.5 mm, and the second direction Y is perpendicular to the first wall 201.

The embodiments of the present application will be illustrated hereinafter. The embodiments described below are exemplary and merely intended to explain the present application, and may not be understood as limitation to the present application. Embodiments with no specific techniques or conditions specified are conducted according to techniques or conditions described in the literature in the art or according to the product specification.

The battery cell 20 and the spacer plate 101 shown in the accompanying drawings are used, a 1C/1C charge-discharge cycle is performed at 60 °C until the capacity decreases to 80% of SOC, cycle endurance accelerated experiment results are carried out, and the test results are shown in Table 1. In Table 1, T1 is a size of the spacer plate in the second direction X, and T2 is a size of the battery cell in the second direction X.

**Table 1**

| T2 (mm) | T1 (mm) | T1/T2 | Cycle endurance accelerated experiment results |
|---|---|---|---|
| 125 | 5.1 | 0.041 | No damaged structure, no diving |
| 26.5 | 6 | 0.226 | No damaged structure, no diving |
| 12.5 | 25 | 2.000 | No damaged structure, no diving |
| 47.4 | 5.1 | 0.108 | No damaged structure, no diving |
| 44 | 20 | 0.455 | No damaged structure, no diving |
| 44 | 60 | 1.364 | No damaged structure, no diving |
| 70.7 | 70 | 0.990 | No damaged structure, no diving |
| 10 | 15 | 1.500 | No damaged structure, no diving |
| 44 | 30 | 0.682 | No damaged structure, no diving |
| 70.72 | 6 | 0.085 | No damaged structure, no diving |
| 10 | 6 | 0.6 | No damaged structure, no diving |

Although the present application has been described with reference to the preferred embodiments thereof, various modifications can be made thereto without departing from the scope of the present application, and the components therein can be replaced with equivalents. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. A battery (10), comprising:
a plurality of battery cells (20) arranged in a first direction; and
a spacer plate (101), the spacer plate (101) extending in the first direction and being connected to a first wall (201) of each battery cell (20) of the plurality of battery cells (20), and the first wall (201) being a wall of the battery cell (20) that has a largest surface area;
wherein a size T1 of the spacer plate (101) in a second direction is greater than 5 mm, and the second direction is perpendicular to the first wall (201).

2. The battery (10) according to claim 1, wherein a chamber (102) is disposed in an interior of the spacer plate (101).

3. The battery (10) according to claim 2, wherein the chamber (102) is configured to accommodate a fluid to adjust a temperature of the battery cell (20).

4. The battery (10) according to claim 2 or 3, wherein the spacer plate (101) further comprises a pair of sub-plates (103) disposed opposite to each other in the second direction, and the chamber (102) is disposed between the pair of sub-plates (103).

5. The battery (10) according to claim 4, wherein a size T3 of a sub-plate (103) in the second direction is 0.1~5 mm.

6. The battery (10) according to claim 4 or 5, wherein the spacer plate (101) further comprises a reinforcing rib (105), and the reinforcing rib (105) is disposed between the pair of sub-plates (103).

7. The battery (10) according to any one of claims 1 to 6, wherein the size T1 of the spacer plate (101) in the second direction and a size T2 of the battery cell (20) in the second direction satisfy: 0.04≤T1/T2≤2.

8. The battery (10) according to any one of claims 1 to 7, wherein the size T1 of the spacer plate (101) in the second direction is not greater than 100 mm.

9. The battery (10) according to any one of claims 1 to 8, wherein an outer surface of the spacer plate (101) is provided with an insulating layer (104), and a size T4 of the insulating layer (104) in the second direction is 0.01~0.3 mm.

10. The battery (10) according to any one of claims 1 to 9, wherein the battery cell (20) comprises two first walls (201) disposed opposite to each other in the second direction and two second walls disposed opposite to each other in the first direction, wherein in the first direction, the second walls of two adjacent battery cells (20) are opposite to each other.

11. The battery (10) according to any one of claims 1 to 10, wherein the battery (10) comprises multiple columns of the plurality of battery cells (20) arranged in the first direction and a plurality of spacer plates (101), wherein the multiple columns of the battery cells (20) and the plurality of spacer plates (101) are alternately disposed in the second direction.

12. The battery (10) according to any one of claims 1 to 10, wherein the battery (10) comprises a plurality of battery modules 100, a battery module 100 comprises at least one column of the plurality of battery cells (20) arranged in the first direction and at least one spacer plate (101), and the at least one column of the battery cells (20) and the at least one spacer plate (101) are alternately disposed in the second direction.

13. The battery (10) according to claim 12, wherein the battery module 100 comprises N columns of the battery cells (20) and N-1 spacer plate(s) (101), the spacer plate is disposed between two adjacent columns of the battery cells (20), and N is an integer greater than 1.

14. The battery (10) according to claim 12 or 13, wherein the plurality of battery modules (100) are arranged in the second direction, and a gap is provided between adjacent battery modules (100).

15. The battery (10) according to any one of claims 1 to 14, wherein the spacer plate (101) is bonded to the first wall (201).

16. A power consumption device, comprising: the battery (10) according to any one of claims 1 to 15, the battery (10) being configured to provide electric energy.

17. A method for producing a battery (10), comprising:
providing a plurality of battery cells (20) arranged in a first direction; and
providing a spacer plate (101), the spacer plate (101) extending in the first direction and being connected to a first wall (201) of each battery cell (20) of the plurality of battery cells (20), and the first wall (201) being a wall of the battery cell (20) that has a largest surface area;
wherein a size T1 of the spacer plate (101) in a second direction is greater than 5 mm, and the second direction is perpendicular to the first wall (201).

18. A device for producing a battery (10), comprising:
a providing module configured to provide a plurality of battery cells (20) arranged in a first direction and a spacer plate (101), the spacer plate (101) extending in the first direction and being connected to a first wall (201) of each battery cell (20) of the plurality of battery cells (20), and the first wall (201) being a wall of the battery cell (20) that has a largest surface area;
wherein a size T1 of the spacer plate (101) in a second direction is greater than 5 mm, and the second direction is perpendicular to the first wall (201).
